(19) Europäisches Patentamt
European Patent Office
Office européen des brevets

(11) Veröffentlichungsnummer: **0 005 228**
**A1**

# (12) EUROPÄISCHE PATENTANMELDUNG

(21) Anmeldenummer: **79101229.7**

(22) Anmeldetag: **24.04.79**

(51) Int. Cl.²: **C 07 F 9/173**

(30) Priorität: **05.05.78 DE 2819825**

(43) Veröffentlichungstag der Anmeldung: **14.11.79**
**Patentblatt 79/23**

(84) Benannte Vertragsstaaten: **BE CH DE FR GB IT NL**

(71) Anmelder: **BAYER Aktiengesellschaft, Zentralbereich Patente,Marken und Lizenzen Bayerwerk, D-5090 Leverkusen 1 (DE)**

(72) Erfinder: **Riebel, Hans-Jochem, Dr., Heimatstrasse 1, D-5418 Selters (DE)**
Erfinder: **Stölzer, Claus, Dr., Sillerstrasse 44, D-5600 Wuppertal 1 (DE)**

## (54) Verfahren zur Herstellung von 0,0-Diäthyl-0-(1-phenyl-2-cyano-propen(1)yl)-thionophosphorsäureester.

(57) Die Anmeldung betrifft ein Verfahren zur Herstellung von O,O-Diäthyl-O-[1-phenyl-2-cyano-propen(1)yl]-thionophosphorsäureester durch Umsetzung eines Benzoesäureesters mit Propionsäurenitril in Gegenwart eines Alkalialkoholats bei Temperaturen zwischen 50 und 150° C und anschließende Umsetzung des Reaktionsgemisches mit O,O-Diäthyl-thionophosphorsäurediesterchlorid, dadurch gekennzeichnet, daß man das als Ausgangsverbindung verwendete Propionsäurenitril in einer Menge von etwa 5 bis 50 Mol pro Mol Benzoesäureester einsetzt, den bei der Umsetzung von Propionitril, Benzoesäureester und Alkoholat anfallenden Alkohol vor der Zugabe des O,O-Diäthylthionophosphorsäurediesterchlorids abdestilliert und durch fortlaufende Zugabe von Propionsäurenitril das Volumen der Reaktionsmischung annähernd konstant hält.

EP 0 005 228 A1

0005228

BAYER AKTIENGESELLSCHAFT
Zentralbereich
Patente, Marken und Lizenzen

5090 Leverkusen, Bayerwerk
Ad-kl

Verfahren zur Herstellung von O,O-Diäthyl-O-(1-phenyl-2-cyano-propen(1)yl)-thionophosphorsäureester

Die Erfindung betrifft ein neues Verfahren zur Herstellung des bekannten O,O-Diäthyl-O-(1-phenyl-2-cyano-propen(1)yl)-thionophosphorsäureesters, einer zur Bekämpfung von Arthropoden geeigneten Verbindung.

Es ist bereits bekannt, daß O,O-Diäthyl-O-(1-phenyl-2-cyano-propen(1)yl)-thionophosphorsäureester durch Umsetzung von O,O-Diäthyl-thionophosphorsäurediesterchlorid mit 2-Benzoyl-propionsäurenitril in Gegenwart eines Säureakzeptors und eines inerten Verdünnungsmittels hergestellt werden kann (vergleiche DT-OS 2 o49 695).

Das hierbei als Ausgangsprodukt benötigte 2-Benzoyl-propionsäurenitril kann z.B. aus Benzoesäureäthylester und Propionsäurenitril in Gegenwart von Natriummethylat hergestellt werden.

Weiter ist bekannt, daß O,O-Diäthyl-O-(1-phenyl-2-cyano-propen(1)yl)-thionophosphorsäureester ohne Zwischenisolierung von 2-Benzoyl-propionsäurenitril in einem "Ein-Topf-Verfahren" durch Reaktion von Benzoesäureäthylester mit Propionsäurenitril in Gegenwart von Natriummethylat und anschließende Umsetzung des Reaktionsgemisches mit O,O-Diäthyl-thionophosphorsäurediesterchlorid hergestellt werden kann (vergleiche DT-OS 2 o49 695).

Bei beiden bekannten Verfahren werden maximale Ausbeuten von nur 3o bis 4o% der Theorie, bezogen auf Benzoesäureäthylester bzw. O,O-Diäthyl-thionophosphorsäurediesterchlorid, erzielt.

Folgende Nachteile bedingen mehr oder weniger die unbefriedigende Ausbeute: Mangelnde Durchmischung bei der Umsetzung von Benzoesäureäthylester mit Propionsäurenitril und Alkoholaten, unvollständiger Ablauf und ungenügende Selektivität der einzelnen Reaktionen sowie der damit verbundene Aufwand zur Abtrennung von Nebenprodukten; als solche sind insbesondere die Thionophosphorsäuretrialkylester zu nennen.

Es wurde nun gefunden, daß man den bekannten O,O-Diäthyl-O-(1-phenyl-2-cyano-propen(1)yl)-thionophosphorsäureester in einem "Ein-Topf-Verfahren" durch Umsetzung eines Benzoesäureesters mit Propionsäurenitril in Gegenwart eines Alkalialkoholats bei Temperaturen zwischen 5o und 15o°C und anschließende Umsetzung des Reaktionsgemisches mit O,O-Diäthyl-thionophosphorsäurediesterchlorid in stark verbesserten Ausbeuten und höherer

Reinheit erhält, wenn man das als Ausgangsstoff verwendete Propionsäurenitril in einem hohen Überschuß, und zwar in einer Menge von etwa 5 bis 5o Mol je Mol Benzoesäureester einsetzt, den bei der Umsetzung von Propionsäurenitril, Benzoesäureester und Alkoholat anfallenden Alkohol vor der Zugabe von 0,0-Diäthyl-thionophosphorsäurediesterchlorid aus dem Reaktionsgemisch abdestilliert und durch fortlaufende Zugabe von Propionsäurenitril das Volumen der Reaktionsmischung annähernd konstant hält.

Bei der erfindungsgemäßen Ausführung des Verfahrens erhält man nunmehr Ausbeuten von 7o-8o% der Theorie mit einem Wirkstoffgehalt von 95%.

Es ist als ausgesprochen überraschend zu bezeichnen, daß das erfindungsgemäße Verfahren unter den angegebenen Reaktionsbedingungen so glatt und selektiv verläuft und den bisher nur in unbefriedigender Ausbeute erhaltenen 0,0-Diäthyl-0-(1-phenyl-2-cyano-propen(1)yl)-thionophosphorsäureester nunmehr in guter Ausbeute und hoher Reinheit liefert. Dies gilt insbesondere mit Rücksicht auf die Tatsache, daß Propionsäurenitril auch schon beim bekannten Verfahren im Überschuß eingesetzt wird und mit einer derart drastischen Ausbeutesteigerung durch Verwendung eines noch höheren Überschusses an Propionsäurenitril nicht zu rechnen war.

Das erfindungsgemäße Verfahren weist eine Reihe von Vorteilen auf. Durch Verwendung von Propionsäurenitril in hohem Überschuß bleibt die Reaktionsmischung immer gut rührbar; dies bewirkt auch ohne Verwendung eines

anderen Verdünnungsmittels die Durchmischbarkeit während der gesamten Reaktionsdauer. Durch das kontinuierliche Abdestillieren des Alkohols aus der Reaktionsmischung wird zudem die Umsetzung in die gewünschte Richtung gelenkt; Ausbeute und Reinheit des Produktes werden stark verbessert. Das in der ersten Stufe als Verdünnungsmittel dienende überschüssige Propionsäurenitril wird als solches auch in der darauf folgenden Phosphorylierungsstufe verwendet. Weitere Lösungs- oder Verdünnungsmittel werden daher im allgemeinen nicht benötigt. Das abdestillierte Propionsäurenitril kann nach Trennung vom Alkohol für weitere Ansätze wiederverwendet werden.

Der Reaktionsablauf kann durch das folgende Schema beschrieben werden:

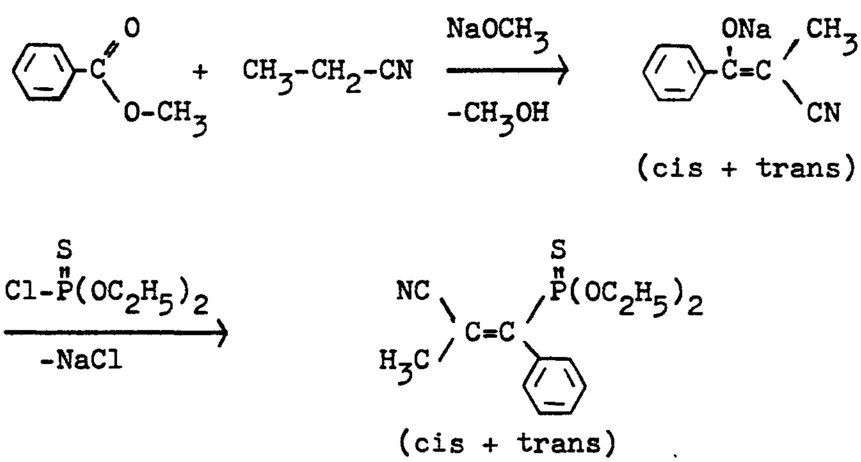

Neben Propionsäurenitril und O,O-Diäthyl-thionophosphorsäurediesterchlorid können als Ausgangsstoffe beliebige Alkylester der Benzoesäure eingesetzt werden. Vorzugsweise werden Benzoesäuremethyl- und -äthylester, insbesondere Benzoesäuremethylester verwendet.

Als Hilfsbasen können Alkalisalze beliebiger Alkohole eingesetzt werden. Vorzugsweise verwendet man Natrium- oder Kalium-methylat, -äthylat oder -tert.-butylat; insbesondere Natriummethylat.

Die Alkoholate können in Substanz oder in Form alkoholischer Lösungen eingesetzt werden.

Durch die Verwendung des Ausgangsproduktes Propionsäurenitril in hohem Überschuß kann wie erwähnt auf die Verwendung weiterer Verdünnungsmittel verzichtet werden.

Die Reaktionstemperatur kann innerhalb eines größeren Bereichs variiert werden. Im allgemeinen arbeitet man bei Temperaturen zwischen 5o und 15o°C, vorzugsweise zwischen 8o und 12o°C. Die Umsetzung wird im allgemeinen bei Normaldruck durchgeführt.

Bei der Durchführung des erfindungsgemäßen Verfahrens setzt man im allgemeinen auf 1 Mol O,O-Diäthyl-thionophosphorsäurediesterchlorid 1 bis 3 Mol, vorzugsweise 1 bis 1,3 Mol Benzoesäureester, 1 bis 1,3 Mol, vorzugsweise 1 bis 1,15 Mol Alkoholat und 5 bis 5o Mol, insbesondere 5 bis 25 Mol Propionsäurenitril ein.

Zweckmäßigerweise werden Benzoesäureester, Alkoholate und Propionsäurenitril bei Raumtemperatur im Reaktionskolben vermischt und anschließend gegebenenfalls unter Rühren mehrere Stunden lang auf 8o bis 12o°C erhitzt. Dann wird der bei der Reaktion entstandene Alkohol abdestilliert, wobei man durch Zugabe von Propionitril das Volumen des Reaktionsgemisches konstant hält. Anschließend wird die Reaktionsmischung langsam mit O,O-Diäthyl-thionophosphorsäurediesterchlorid versetzt und noch einige Zeit unter Rühren bei 8o bis 12o°C gehalten. Zur Aufarbeitung wird das Propionsäurenitril zunächst im Vakuum abdestilliert. Der Rückstand wird mit Wasser oder erforderlichenfalls mit verdünnter Natronlauge zwecks Reinigung ausgerührt und in Toluol aufgenommen. Die Lösung wird nach Wasserwäsche und Trocknen im Vakuum eingedampft. Das Produkt fällt als Öl an und kann destilliert werden. Es kann auch durch "Andestillieren", d.h. durch längeres Erhitzen unter vermindertem Druck auf mäßig erhöhte Temperaturen von flüchtigen Anteilen weitgehend befreit und auf diese Weise gereinigt werden. Als Reinheitskriterium dient das NMR-Spektrum und das Gaschromatogramm.

Der nach dem erfindungsgemäßen Verfahren herstellbare O,O-Diäthyl-O-(1-phenyl-2-cyano-propen(1)yl)-thionophosphorsäureester kann, wie bereits erwähnt, zur Bekämpfung von Arthropoden, insbesondere von Insekten und Milben verwendet werden (vergleiche DT-OS 2o49695).

Das erfindungsgemäße Verfahren wird durch die folgenden Beispiele im einzelnen näher erläutert:

Beispiel 1:

Eine Mischung von 156,5 g (1,15 Mol) Benzoesäuremethylester, 54 g (1 Mol) Natriummethylat und 5oo ml Propionsäurenitril wird 3 Stunden lang bei einer Badtemperatur von 12o°C (Innentemperatur 85 bis 1oo°C) gerührt. Dann wird das bei der Reaktion entstandene Methanol bei Normaldruck abdestilliert. Durch gleichzeitiges Zutropfen von Propionsäurenitril hält man das Volumen der Reaktionsmischung konstant. Wenn ca. 2oo ml Destillat übergegangen sind, läßt man 188 g (1 Mol) O,O-Diäthyl-thionophosphorsäurediesterchlorid in das Reaktionsgemisch einlaufen und rührt dann die Mischung noch 1 Stunde lang bei einer Badtemperatur von 12o°C. Hiernach wird das Propionsäurenitril im Vakuum abdestilliert und der Rückstand mit Wasser (3oo ml) ausgerührt. Anschließend nimmt man die organische Produktphase in 3oo ml Toluol auf, wäscht die Lösung noch einmal mit 25o ml Wasser und trocknet die organische Phase über Calciumchlorid. Die Toluollösung wird eingeengt und bei 12o°C/2 Torr andestilliert.
Ausbeute: 22o g (71 % der Theorie - bezogen auf O,O-Diäthyl-thionophosphorsäurediesterchlorid).
Gehalt nach NMR-Spektrum und Gaschromatogramm: 95% der Theorie O,O-Diäthyl-O-(1-phenyl-2-cyano-propen(1)yl)-thionophosphorsäureester mit einem Brechungsindex von $n_D^{21}$: 1,534o.

Beispiel 2:

Eine Mischung von 156,5 g (1,15 Mol) Benzoesäuremethylester, 1 Mol techn. Natriummethylatlösung und 5oo ml Propionsäurenitril wird 3 Stunden lang bei einer Badtemperatur von 12o°C (Innentemperatur 85-1oo°C) gerührt. Dann wird das bei der Umsetzung angefallene Methanol unter Normaldruck abdestilliert. Durch gleichzeitiges Zutropfen von Propionsäurenitril hält man das Volumen der Reaktionsmischung konstant. Wenn ca. 45o ml Destillat übergegangen sind, läßt man 169,5 g (o,9 Mol) O,O-Diäthyl-thionophosphorsäurediesterchlorid in das Reaktionsgemisch einlaufen und rührt dann die Mischung noch 1 Stunde lang bei einer Badtemperatur von 12o°C. Anschließend wird das Propionsäurenitril im Vakuum abdestilliert und der Rückstand mit Wasser (3oo ml) ausgerührt. Nach Abtrennung der organischen Produktphase wird das so erhaltene Öl in 3oo ml Toluol aufgenommen und noch einmal mit 25o ml Wasser gewaschen. Die Toluollösung wird eingeengt und bis 12o°C/2 Torr andestilliert. Ausbeute: 21o g (75% der Theorie bezogen auf O,O-Diäthyl-thionophosphorsäurediesterchlorid).
Gehalt nach NMR-Spektrum und Gaschromatogramm: 95% der Theorie O,O-Diäthyl-O-(1-phenyl-2-cyano-propen(1)yl)-thionophosphorsäureester.

Beispiel 3:

In einem 2o l-Planschliffkolben, der mit einer 4o cm langen Vigreux-Kolonne und Destillationsbrücke versehen ist, wird eine Mischung von 2,o4 kg (15 Mol) Benzoesäuremethylester, 2,11 kg (1o Mol) techn. Natriummethylatlösung und 5 l Propionsäurenitril unter Rühren zum Sieden erhitzt (Badtemperatur: ca. 13o°C, Innentemperatur 85-1oo°C). Während das zunächst als Lösungsmittel verwendete bzw. bei der Reaktion entstehende Methanol abdestilliert wird, hält man durch kontinuierliche Zugabe von Propionsäurenitril (ca. 6,5 l) das Volumen der Reaktionsmischung annähernd konstant. Wenn ca. 8,1 l Destillat übergegangen sind, läßt man 1,7 kg (9,o1 Mol) O,O-Diäthyl-thionophosphorsäurediesterchlorid innerhalb von 15 Minuten in die Reaktionsmischung einlaufen und destilliert das Lösungsmittel im Vakuum ab, nachdem man die Mischung eine weitere Stunde bei 12o°C Badtemperatur gerührt hat. Der Rückstand wird mit 3 l verdünnter Natronlauge verrührt und mit 6 l Toluol extrahiert. Die Toluollösung wird zweimal mit je 3 l Wasser gewaschen, über Natriumsulfat getrocknet, eingeengt und bis 15o°C/3 Torr andestilliert.

Ausbeute: 2,o64 kg (73,6 % der Theorie bezogen auf O,O-Diäthyl-thionophosphorsäurediesterchlorid);
Gehalt nach NMR-Spektrum und Gaschromatogramm: 95% der Theorie O,O-Diäthyl-O-(1-phenyl-2-cyano-propen(1)yl)-thionophosphorsäureester.

Patentanspruch

Verfahren zur Herstellung von O,O-Diäthyl-O-(1-phenyl-2-cyano-propen(1)yl)-thionophosphorsäureester durch Umsetzung eines Benzoesäureesters mit Propionsäurenitril in Gegenwart eines Alkalialkoholats bei Temperaturen zwischen 50 und 150°C und anschließende Umsetzung des Reaktionsgemisches mit O,O-Diäthyl-thionophosphorsäurediesterchlorid, dadurch gekennzeichnet, daß man das als Ausgangsverbindung verwendete Propionsäurenitril in einer Menge von etwa 5 bis 50 Mol pro Mol Benzoesäureester einsetzt, den bei der Umsetzung von Propionitril, Benzoesäureester und Alkoholat anfallenden Alkohol vor der Zugabe des O,O-Diäthyl-thionophosphorsäurediesterchlorids abdestilliert und durch fortlaufende Zugabe von Propionsäurenitril das Volumen der Reaktionsmischung annähernd konstant hält.

0005228

Europäisches Patentamt

# EUROPÄISCHER RECHERCHENBERICHT

Nummer der Anmeldung

EP 79 101 229.7

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE - A - 2 409 462 (BAYER) | |
| | -- | |
| A | CH - A - 557 384 (BAYER) | |
| | -- | |
| A | FR - A - 2 321 500 (BAYER) | |
| | -- | |
| D | DE - A - 2 049 695 (BAYER) | |
| | ---- | |

KLASSIFIKATION DER ANMELDUNG (Int.Cl.²)

C 07 F 9/173

RECHERCHIERTE SACHGEBIETE (Int. Cl.²)

A 01 N 9/36
C 07 F 9/173

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 30-07-1979 | KAPTEYN |